# EUROPEAN PATENT APPLICATION

(11) **EP 3 402 145 A1**
(43) Date of publication of application: **14.11.2018**
(21) Application number: 16887754.6
(22) Date of filing: 14.12.2016
(51) Int. Cl.: H04L 25/03

(54) **METHOD AND DEVICE FOR PILOT SIGNAL TRANSMISSION AND CHANNEL ESTIMATION**

(30) Priority: 29.01.2016 CN 201610064520
(71) Applicant: Huawei Technologies Co., Ltd., Longgang District Shenzhen, Guangdong 518129 (CN)
(72) Inventor: WANG, Jian, Shenzhen Guangdong 518129 (CN); QIAO, Yunfei, Shenzhen Guangdong 518129 (CN); HUANGFU, Yourui, Shenzhen Guangdong 518129 (CN)
(74) Representative: Gill Jennings & Every LLP
(86) International application number: PCT/CN2016/109970
(87) International publication number: WO 2017/128883

(57) **Abstract**

A pilot signal sending method, a channel estimation method, and a device are provided, to provide a pilot signal sending manner applicable to an IoT system. The method includes: mapping, by a terminal device, a pilot signal to M first subcarriers, where each first subcarrier is specially used for carrying a pilot signal, a quantity of available subcarriers of the terminal device is N, and M is a positive integer less than N; and sending, by the terminal device, the pilot signal to a network device by using the M first subcarriers.

## Description

This application claims priority to Chinese Patent Application No. 201610064520.8, filed with the Chinese Patent Office on January 29, 2016 and entitled "PILOT SIGNAL SENDING METHOD, CHANNEL ESTIMATION METHOD, AND DEVICE", which is incorporated herein by reference in its entirety.

### TECHNICAL FIELD

The present invention relates to the communications field, and in particular, to a pilot signal sending method, a channel estimation method, and a device.

### BACKGROUND

In an existing communications system, a terminal device needs to insert a pilot signal into uplink data according to a specific rule, so that a base station can perform channel estimation based on the pilot signal and decode the uplink data.

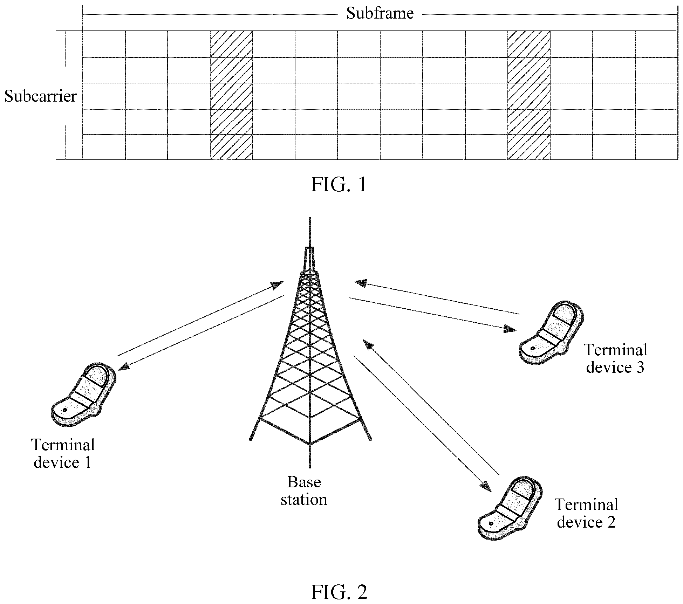

In a Long Term Evolution (Long Term Evolution, LTE) system, an uplink demodulation reference signal (DeModulation-Reference Signal, DM-RS) is used to carry an uplink pilot signal, and a manner of placing the DM-RS is shown in FIG. 1. FIG. 1 shows a subframe, which includes 14 symbols on a time axis. Each row in FIG. 1 represents one subcarrier. For example, five subcarriers in FIG. 1 are all available subcarriers of a terminal device. It can be learned that the DM-RS appears on a fourth symbol and an eleventh symbol of each subframe in a time domain, and appears on all available subcarriers of a terminal device in a frequency domain, as shown by oblique-line areas in FIG. 1. That is, currently, in the frequency domain, a complete pilot signal is divided into a plurality of parts to be respectively carried on different subcarriers.

However, transmission in a current Narrowband Internet of Things (Narrow Band-Internet of Things, NB-IoT) system is mainly transmission of small packets, and usually, a small quantity of subcarriers are allocated to one terminal device. In this case, when a quantity of available subcarriers of a terminal device is relatively small, if a pilot signal is transmitted by using the manner shown in FIG. 1, the pilot signal is restricted in a frequency domain, causing a relatively short sequence of the pilot signal. When the base station performs channel estimation based on such a pilot signal, an inaccurate result may be obtained, leading to relatively poor performance.

It can be learned that currently there is no pilot signal sending manner applicable to the NB-IoT system.

### SUMMARY

This application provides a pilot signal sending method, a channel estimation method, and a device, so as to provide a new manner for sending a pilot signal.

According to a first aspect, a pilot signal sending method is provided. The method includes: mapping, by a terminal device, a pilot signal to M first subcarriers; and sending, by the terminal device, the pilot signal to a network device by using the M first subcarriers. Each first subcarrier is specially used for carrying a pilot signal, a quantity of available subcarriers of the terminal device is N, and M is a positive integer less than N.

The terminal device may select, from the available subcarriers of the terminal device, a subcarrier specially used for transmitting a pilot signal, that is, a first subcarrier, and may use the first subcarrier to carry the pilot signal when sending the pilot signal. In this way, there is no need to use all the available subcarriers of the terminal device to carry the pilot signal, and even if the quantity of available subcarriers of the terminal device is relatively small, the terminal device can select a subcarrier from the available subcarriers to transmit the pilot signal, thereby avoiding a restriction on a sequence of the pilot signal in a frequency domain as much as possible. When the network device performs channel estimation based on such a pilot signal, a relatively accurate channel estimation value is obtained, so that performance is relatively good.

With reference to the first aspect, in a first possible implementation of the first aspect, if M is greater than or equal to 2, there is at least one second subcarrier between every two of the M first subcarriers, and the second subcarrier is used to carry a data signal sent by the terminal device.

With reference to the first aspect, in a second possible implementation of the first aspect, if M is equal to 1, the M first subcarriers are located in the middle of the available subcarriers of the terminal device.

That is, positions of first subcarriers may vary with a quantity of the first subcarriers. A general principle may be to make the first subcarriers used to carry pilot signals be located as evenly as possible between subcarriers used to carry data signals. Because a channel estimation value obtained based on a pilot signal may be used to decode a data signal carried on a second subcarrier, the pilot signal should represent a status of the second subcarrier as much as possible. A more accurate channel estimation result may be obtained by placing the first subcarriers as much as possible between second subcarriers.

With reference to the first aspect, the first possible implementation of the first aspect, or the second possible implementation of the first aspect, in a third possible implementation of the first aspect, a total bandwidth of the available subcarriers of the terminal device is less than a coherence bandwidth of a radio channel between the terminal device and the network device.

Because the network device uses a pilot signal carried on a first subcarrier to perform channel estimation, and uses a channel estimation value to decode a data signal carried on a second subcarrier, a radio channel on the first subcarrier needs to be not much different from a radio channel on the second subcarrier. Otherwise, decoding may fail. In addition, within a coherence bandwidth of a channel, the channel is almost unchanged in the frequency domain. Therefore, to improve a decoding success rate, the total bandwidth of the available subcarriers of the terminal device may be made less than the coherence bandwidth of the radio channel.

With reference to any one of the first aspect or the first to the third possible implementations of the first aspect, in a fourth possible implementation of the first aspect, the mapping, by a terminal device, a pilot signal to M first subcarriers may be implemented in the following manner: mapping, by the terminal device, the pilot signal to the M first subcarriers in a first time range. In addition, the terminal device may further map the pilot signal to K first subcarriers in a second time range, where K is a positive integer less than N.

In different time ranges, first subcarriers selected by the terminal device may be the same or different. The terminal device can relatively flexibly adjust the selected first subcarriers based on different actual situations in the different time ranges, and can select more suitable subcarriers in the different time ranges to carry a pilot signal and a data signal separately.

With reference to any one of the first aspect or the first to the fourth possible implementations of the first aspect, in a fifth possible implementation of the first aspect, the terminal device may receive first information broadcast by the network device, where the first information is used to indicate a subcarrier that can be specially used for carrying a pilot signal, and the terminal device selects the M first subcarriers based on the subcarrier indicated by the first information.

That is, the terminal device may learn in advance which subcarriers can be specially used for carrying a pilot signal, so that the terminal device can select, from the available subcarriers of the terminal device, the subcarriers that can be specially used for carrying the pilot signal as first subcarriers. The network device also knows the subcarriers that can be specially used for carrying the pilot signal. In this way, the network device can receive the pilot signal by using the known subcarriers, thereby avoiding a reception failure as much as possible.

With reference to any one of the first aspect or the first to the fifth possible implementations of the first aspect, in a sixth possible implementation of the first aspect, the sending, by the terminal device, the pilot signal to a network device by using the M first subcarriers may be implemented in the following manner: periodically sending, by the terminal device, a pilot signal to the network device by using at least one of the M first subcarriers.

That is, the terminal device may send a plurality of pilot signals by using at least one first subcarrier, where the pilot signals may be the same or different. In this way, the network device can receive more pilot signals by using a limited quantity of first subcarriers. The network device performs channel estimation based on a plurality of pilot signals, and may, for example, decode a data signal by integrating a plurality of channel estimation results. This can improve channel estimation precision and the decoding success rate.

According to a second aspect, a channel estimation method is provided. The method includes: receiving, by a network device by using M first subcarriers, a pilot signal sent by a terminal device; and performing, by the network device, channel estimation based on the received pilot signal. Each first subcarrier is specially used for carrying a pilot signal, a quantity of available subcarriers allocated by the network device to the terminal device is N, and M is a positive integer less than N.

The terminal device may select, from the available subcarriers of the terminal device, a first subcarrier specially used for transmitting a pilot signal, and may use the first subcarrier to carry the pilot signal when sending the pilot signal. In this way, there is no need to use all the available subcarriers of the terminal device to carry the pilot signal, and even if the quantity of available subcarriers of the terminal device is relatively small, the terminal device can select a subcarrier from the available subcarriers to transmit the pilot signal, thereby avoiding a restriction on a sequence of the pilot signal in a frequency domain as much as possible. When the network device performs channel estimation based on such a pilot signal, a relatively accurate channel estimation value is obtained, so that performance is relatively good.

With reference to the second aspect, in a first possible implementation of the second aspect, if M is greater than or equal to 2, there is at least one second subcarrier between every two of the M first subcarriers, and the second subcarrier is used to carry a data signal sent by the terminal device.

With reference to the second aspect, in a second possible implementation of the second aspect, if M is equal to 1, the M first subcarriers are located in the middle of the available subcarriers of the terminal device.

With reference to the second aspect, the first possible implementation of the second aspect, or the second possible implementation of the second aspect, in a third possible implementation of the second aspect, the network device may decode, based on a result of channel estimation performed by using a pilot signal carried on one of the first subcarriers, a data signal sent by the terminal device by using at least one second subcarrier.

That is, a pilot signal carried on one first subcarrier may be used to decode a data signal carried on at least one second subcarrier. This improves utilization of the pilot signal and also improves decoding efficiency.

With reference to the third possible implementation of the second aspect, in a fourth possible implementation of the second aspect, after receiving a first pilot signal by using one of the M first subcarriers, the network device may perform a correlation operation on the first pilot signal and each locally stored pilot signal; if values obtained through correlation operations on the first pilot signal and at least two locally stored pilot signals are greater than a threshold, the network device determines that the first pilot signal is a pilot signal obtained by superimposing the at least two pilot signals; and the network device determines, in the at least two pilot signals, the pilot signal sent by the terminal device.

A first subcarrier may carry superimposed pilot signals. That is, a pilot signal received by the network device may be a result of superimposition of a plurality of pilot signals, and the superimposed pilot signals may be from different terminal devices. Therefore, the network device needs to distinguish, in the superimposed pilot signals, pilot signals that are from different terminal devices, so as to decode, based on a corresponding pilot signal, a data signal sent by the terminal device that sends the pilot signal. In this way, a pilot signal sent by one terminal device is prevented as much as possible from being used to decode a data signal sent by another terminal device, thereby improving a decoding success rate.

With reference to any one of the second aspect or the first to the fourth possible implementations of the second aspect, in a fifth possible implementation of the second aspect, the receiving, by a network device by using M first subcarriers, a pilot signal sent by a terminal device may be implemented in the following manner: receiving, by the network device by using the M first subcarriers in a first time range, the pilot signal sent by the terminal device. In addition, the network device may further receive, by using K first subcarriers in a second time range, the pilot signal sent by the terminal device, where K is a positive integer less than N.

In different time ranges, first subcarriers selected by the terminal device may be the same or different. The terminal device can relatively flexibly adjust the selected first subcarriers based on different actual situations in the different time ranges. In addition, the network device can relatively accurately receive a pilot signal by using a first subcarrier selected by the terminal device, and a receiving success rate is relatively high.

With reference to any one of the second aspect or the first to the fifth possible implementations of the second aspect, in a sixth possible implementation of the second aspect, the network device may further broadcast first information, where the first information is used to indicate a subcarrier that can be specially used for carrying a pilot signal.

That is, the network device may first broadcast first information, so that the terminal device can learn in advance which subcarriers can be specially used for carrying a pilot signal. Therefore, the terminal device can select, from the available subcarriers of the terminal device, the subcarriers that can be specially used for carrying the pilot signal as first subcarriers. The network device also knows the subcarriers that can be specially used for carrying the pilot signal. In this way, the network device can receive the pilot signal by using the known subcarriers, thereby avoiding a reception failure as much as possible.

With reference to any one of the second aspect or the first to the sixth possible implementations of the second aspect, in a seventh possible implementation of the second aspect, the receiving, by a network device by using M first subcarriers, a pilot signal sent by a terminal device may be implemented in the following manner: receiving, by the network device by using at least one of the M first subcarriers, a pilot signal periodically sent by the terminal device.

That is, the terminal device may send a plurality of pilot signals by using at least one first subcarrier, where the pilot signals may be the same or different. In this way, the network device can receive more pilot signals by using a limited quantity of first subcarriers. The network device performs channel estimation based on a plurality of pilot signals, and may, for example, decode a data signal by integrating a plurality of channel estimation results. This can improve channel estimation precision and the decoding success rate.

According to a third aspect, a terminal device is provided. The terminal device includes a transmitter, a memory, and a processor. The memory is configured to store an instruction. The processor is connected to the transmitter and the memory. The processor is configured to execute the instruction stored in the memory to: map a pilot signal to M first subcarriers; and instruct the transmitter to send the pilot signal to a network device by using the M first subcarriers. Each first subcarrier is specially used for carrying a pilot signal, a quantity of available subcarriers of the terminal device is N, and M is a positive integer less than N.

With reference to the third aspect, in a first possible implementation of the third aspect, if M is greater than or equal to 2, there is at least one second subcarrier between every two of the M first subcarriers, and the second subcarrier is used to carry a data signal sent by the terminal device.

With reference to the third aspect, in a second possible implementation of the third aspect, if M is equal to 1, the M first subcarriers are located in the middle of the available subcarriers of the terminal device.

With reference to the third aspect, the first possible implementation of the third aspect, or the second possible implementation of the third aspect, in a third possible implementation of the third aspect, a total bandwidth of the available subcarriers of the terminal device is less than a coherence bandwidth of a radio channel between the terminal device and the network device.

With reference to any one of the third aspect or the first to the third possible implementations of the third aspect, in a fourth possible implementation of the third aspect, the processor is configured to map the pilot signal to the M first subcarriers in a first time range. In addition, the processor may further map the pilot signal to K first subcarriers in a second time range, where K is a positive integer less than N.

With reference to any one of the third aspect or the first to the fourth possible implementations of the third aspect, in a fifth possible implementation of the third aspect, the processor is further configured to: instruct the receiver to receive first information broadcast by the network device, where the first information is used to indicate a subcarrier that can be specially used for carrying a pilot signal; and select the M first subcarriers based on the subcarrier indicated by the first information.

With reference to any one of the third aspect or the first to the fifth possible implementations of the third aspect, in a sixth possible implementation of the third aspect, the processor is configured to instruct the transmitter to periodically send a pilot signal to the network device by using at least one of the M first subcarriers.

According to a fourth aspect, a network device is provided. The network device includes a receiver, a memory, and a processor. The memory is configured to store an instruction. The processor is connected to the transmitter and the memory, and is configured to execute the instruction stored in the memory to: instruct the receiver to receive, by using M first subcarriers, a pilot signal sent by a terminal device; and perform channel estimation based on the received pilot signal. Each first subcarrier is specially used for carrying a pilot signal, a quantity of available subcarriers allocated by the network device to the terminal device is N, and M is a positive integer less than N.

With reference to the fourth aspect, in a first possible implementation of the fourth aspect, if M is greater than or equal to 2, there is at least one second subcarrier between every two of the M first subcarriers, and the second subcarrier is used to carry a data signal sent by the terminal device.

With reference to the fourth aspect, in a second possible implementation of the fourth aspect, if M is equal to 1, the M first subcarriers are located in the middle of the available subcarriers of the terminal device.

With reference to the fourth aspect, the first possible implementation of the fourth aspect, or the second possible implementation of the fourth aspect, in a third possible implementation of the fourth aspect, the processor is further configured to decode, based on a result of channel estimation performed by using a pilot signal carried on one of the first subcarriers, a data signal sent by the terminal device by using at least one second subcarrier.

With reference to the third possible implementation of the fourth aspect, in a fourth possible implementation of the fourth aspect, the processor is further configured to: after instructing the receiver to receive a first pilot signal by using one of the M first subcarriers, perform a correlation operation on the first pilot signal and each locally stored pilot signal; if values obtained through correlation operations on the first pilot signal and at least two locally stored pilot signals are greater than a threshold, determine that the first pilot signal is a pilot signal obtained by superimposing the at least two pilot signals; and determine, in the at least two pilot signals, the pilot signal sent by the terminal device.

With reference to any one of the fourth aspect or the first to the fourth possible implementations of the fourth aspect, in a fifth possible implementation of the fourth aspect, the processor is configured to instruct the receiver to receive, by using the M first subcarriers in a first time range, the pilot signal sent by the terminal device. In addition, the processor may further be configured to instruct the receiver to receive, by using K first subcarriers in a second time range, the pilot signal sent by the terminal device, where K is a positive integer less than N.

With reference to any one of the fourth aspect or the first to the fifth possible implementations of the fourth aspect, in a sixth possible implementation of the fourth aspect, the network device further includes a transmitter, and the processor is further configured to instruct the transmitter the broadcast first information, where the first information is used to indicate a subcarrier that can be specially used for carrying a pilot signal.

With reference to any one of the fourth aspect or the first to the sixth possible implementations of the fourth aspect, in a seventh possible implementation of the fourth aspect, the processor is configured to instruct the receiver to receive, by using at least one of the M first subcarriers, a pilot signal periodically sent by the terminal device.

According to a fifth aspect, another terminal device is provided. The terminal device includes a processing module and a sending module. The processing module is configured to map a pilot signal to M first subcarriers. The sending module is configured to send the pilot signal to a network device by using the M first subcarriers. Each first subcarrier is specially used for carrying a pilot signal, a quantity of available subcarriers of the terminal device is N, and M is a positive integer less than N.

With reference to the fifth aspect, in a first possible implementation of the fifth aspect, if M is greater than or equal to 2, there is at least one second subcarrier between every two of the M first subcarriers, and the second subcarrier is used to carry a data signal sent by the terminal device.

With reference to the fifth aspect, in a second possible implementation of the fifth aspect, if M is equal to 1, the M first subcarriers are located in the middle of the available subcarriers of the terminal device.

With reference to the fifth aspect, the first possible implementation of the fifth aspect, or the second possible implementation of the fifth aspect, in a third possible implementation of the fifth aspect, a total bandwidth of the available subcarriers of the terminal device is less than a coherence bandwidth of a radio channel between the terminal device and the network device.

With reference to any one of the fifth aspect or the first to the third possible implementations of the fifth aspect, in a fourth possible implementation of the fifth aspect, the processing module may map the pilot signal to the M first subcarriers in a first time range. In addition, the processing module may further map the pilot signal to K first subcarriers in a second time range, where K is a positive integer less than N.

With reference to any one of the fifth aspect or the first to the fourth possible implementations of the fifth aspect, in a fifth possible implementation of the fifth aspect, the terminal device further includes a receiving module, configured to receive first information broadcast by the network device, where the first information is used to indicate a subcarrier that can be specially used for carrying a pilot signal. The processing module is further configured to select the M first subcarriers based on the subcarrier indicated by the first information.

With reference to any one of the fifth aspect or the first to the fifth possible implementations of the fifth aspect, in a sixth possible implementation of the fifth aspect, the sending module is configured to periodically send a pilot signal to the network device by using at least one of the M first subcarriers.

According to a sixth aspect, another network device is provided. The network device includes a receiving module and a processing module. The receiving module is configured to receive, by using M first subcarriers, a pilot signal sent by a terminal device. The processing module is configured to perform channel estimation based on the received pilot signal. Each first subcarrier is specially used for carrying a pilot signal, a quantity of available subcarriers allocated by the network device to the terminal device is N, and M is a positive integer less than N.

With reference to the sixth aspect, in a first possible implementation of the sixth aspect, if M is greater than or equal to 2, there is at least one second subcarrier between every two of the M first subcarriers, and the second subcarrier is used to carry a data signal sent by the terminal device.

With reference to the sixth aspect, in a second possible implementation of the sixth aspect, if M is equal to 1, the M first subcarriers are located in the middle of the available subcarriers of the terminal device.

With reference to the sixth aspect, the first possible implementation of the sixth aspect, or the second possible implementation of the sixth aspect, in a third possible implementation of the sixth aspect, the processing module is further configured to decode, based on a result of channel estimation performed by using a pilot signal carried on one of the first subcarriers, a data signal sent by the terminal device by using at least one second subcarrier.

With reference to the third possible implementation of the sixth aspect, in a fourth possible implementation of the sixth aspect, the processing module is further configured to: after the receiving module receives a first pilot signal by using one of the M first subcarriers, perform a correlation operation on the first pilot signal and each locally stored pilot signal; if values obtained through correlation operations on the first pilot signal and at least two locally stored pilot signals are greater than a threshold, determine that the first pilot signal is a pilot signal obtained by superimposing the at least two pilot signals; and determine, in the at least two pilot signals, the pilot signal sent by the terminal device.

With reference to any one of the sixth aspect or the first to the fourth possible implementations of the sixth aspect, in a fifth possible implementation of the sixth aspect, the receiving module is configured to receive, by using the M first subcarriers in a first time range, the pilot signal sent by the terminal device. In addition, the receiving module may further be configured to receive, by using K first subcarriers in a second time range, the pilot signal sent by the terminal device, where K is a positive integer less than N.

With reference to any one of the sixth aspect or the first to the fifth possible implementations of the sixth aspect, in a sixth possible implementation of the sixth aspect, the network device further includes a sending module, configured to broadcast first information, where the first information is used to indicate a subcarrier that can be specially used for carrying a pilot signal.

With reference to any one of the sixth aspect or the first to the sixth possible implementations of the sixth aspect, in a seventh possible implementation of the sixth aspect, the receiving module is configured to receive, by using at least one of the M first subcarriers, a pilot signal periodically sent by the terminal device.

In this application, the terminal device may send a pilot signal by using a dedicated first subcarrier, thereby reducing dependency of the pilot signal on the frequency domain. Therefore, a length of a sequence of the pilot signal can be correspondingly increased to some extent, thereby improving precision of channel estimation performed by the network device based on a pilot signal.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of sending a pilot signal in an LTE system;
FIG. 2 is a schematic diagram of an application scenario according to an embodiment of the present invention;
FIG. 3 is an interaction flowchart of a pilot signal sending and receiving method according to an embodiment of the present invention;
FIG. 4 is a schematic diagram of superimposing pilot signals according to an embodiment of the present invention;
FIG. 5 is a schematic diagram of performing channel estimation according to an embodiment of the present invention;
FIG. 6 is another schematic diagram of performing channel estimation according to an embodiment of the present invention;
FIG. 7 is a schematic structural diagram of a terminal device according to an embodiment of the present invention;
FIG. 8A and FIG. 8B are two schematic structural diagrams of a network device according to an embodiment of the present invention;
FIG. 9 is a structural block diagram of a terminal device according to an embodiment of the present invention; and
FIG. 10 is a structural block diagram of a network device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The following describes and explains some terms in the present invention, to facilitate understanding by a person skilled in the art.
(1) A terminal device is a device that provides voice and/or data connectivity to users, and may include, for example, a handheld device having a wireless connection function or a processing device connected to a wireless modem. The terminal device may communicate with a core network by using a radio access network (Radio Access Network, RAN), to exchange voice and/or data with the RAN. The terminal device may include a wireless terminal device, a mobile terminal device, a subscriber unit (Subscriber Unit), a subscriber station (Subscriber Station), a mobile station (Mobile Station), a remote station (Remote Station), an access point (Access Point, AP), a remote terminal device (Remote Terminal), an access terminal device (Access Terminal), a user terminal device (User Terminal), a user agent (User Agent), UE, a user device (User Device), or the like. For example, the terminal device may be a mobile phone (or referred to as a "cellular" phone), a computer with a mobile terminal device, or a portable, pocket-sized, handheld, computer built-in, or in-vehicle mobile apparatus. For example, the terminal device may be a device such as a personal communications service (Personal Communication Service, PCS) phone, a cordless phone, a Session Initiation Protocol (Session Initiation Protocol, SIP) phone, a wireless local loop (Wireless Local Loop, WLL) station, or a personal digital assistant (Personal Digital Assistant, PDA).
(2) A network device includes, for example, an access network device. The access network device may include, for example, a base station such as an access point. The base station may be a device that communicates with a wireless terminal device by using one or more sectors over an air interface in an access network. The base station may be configured to convert a received radio frame into an Internet Protocol (IP) packet or vice versa, and is used as a router between the wireless terminal device and a remaining part of the access network. The remaining part of the access network may include an IP network. The base station may further coordinate attribute management of the air interface. For example, the base station may include a radio network controller (Radio Network Controller, RNC) or a base station controller (Base Station Controller, BSC), or may include an evolved base station in a Long Term Evolution (Long Term Evolution, LTE) system or in LTE-Advanced (LTE-Advanced, LTE-A), for example, a NodeB, an eNB, an e-NodeB, or an evolved NodeB. This is not limited in the embodiments of the present invention.
(3) The Internet of Things (Internet of Things, IoT) is a constituent part of 5th generation mobile communications technologies (5G), and a market demand for the IoT is growing rapidly. The 3rd Generation Partnership Project (The 3rd Generation Partnership Project, 3GPP) is currently studying how to make full use of features of a narrowband technology to carry an IoT service, by designing a new air interface based on a cellular network. Such loTs are referred to as NB-IoTs. Compared with a conventional cellular network, NB-IoT services generally have characteristics such as a low rate and a long arrival cycle. Compared with the conventional cellular network, the NB-IoT services generate smaller data packets, and are usually insensitive to a time delay. In addition, the NB-IoT usually requires lower power consumption of a terminal device. This saves battery power of the terminal device, and ensures an ultra long standby time of the terminal device, thereby reducing manpower costs for battery replacement.
(4) In the embodiments of the present invention, "a plurality of" refers to two or more; "and/or" describes an association relationship between associated objects and represents that three relationships may exist. For example, A and/or B may represent the following three cases: Only A exists, both A and B exist, and only B exists. In addition, unless otherwise stated, the character "/" generally indicates an "or" relationship between the associated objects.

Referring to FIG. 2, FIG. 2 shows a possible application scenario according to an embodiment of the present invention. In FIG. 2, a terminal device 1, a terminal device 2, and a terminal device 3 are all connected to a base station. The terminal device 1, the terminal device 2, and the terminal device 3 may separately communicate with the base station. For example, each of the terminal device 1, the terminal device 2, and the terminal device 3 may send a pilot signal to the base station. After receiving the pilot signals, the base station may respectively perform channel estimation for the terminal device 1, the terminal device 2, and the terminal device 3.

Solutions provided in the embodiments of the present invention are described below. In the following descriptions, a Narrowband IoT system is used as an example. It should be noted that during actual application, in addition to the Narrowband IoT system, the technical solutions provided in the embodiments of the present invention may further be applicable to another system such as an LTE system.

For example, in the Narrowband IoT system, a system bandwidth usually includes a small quantity of subcarriers, and a terminal device in the IoT system usually may use all subcarriers of the Narrowband IoT system. In this case, it may be considered that a subcarrier that may be used by a terminal device is an available subcarrier of the terminal device. Certainly, in the Narrowband IoT system, it is possible that some terminal devices cannot use all subcarriers of the system and can only use some subcarriers of the system. In this case, it may be considered that a subcarrier that may be used by a terminal device in the system is an available subcarrier of the terminal device. In the IoT system, each terminal device usually does not have many available subcarriers. The terminal device may select M subcarriers from the available subcarriers. For example, each of the M subcarriers is referred to as a first subcarrier, and a subcarrier that is not selected by the terminal device as the first subcarrier is referred to as a second subcarrier. The second subcarrier can be used to carry a data signal. The M first subcarriers can be specially used for carrying a pilot signal. The terminal device may send a pilot signal on each first subcarrier. That is, different from the LTE system in which a pilot signal is sent by using all available subcarriers of the terminal device, in the embodiments of the present invention, the terminal device may use any one or more of the M first subcarriers to carry a pilot signal. In this way, the pilot signal is not restricted in a frequency domain. Moreover, the first subcarrier is specially used for transmitting a pilot signal and is not used to transmit a data signal. This can effectively increase a length of a sequence of the pilot signal. In addition, channel estimation precision is determined by the length of the sequence of the pilot signal to a relatively large extent, and a longer sequence of a pilot signal indicates higher channel estimation precision. Therefore, by means of the solutions provided in the embodiments of the present invention, precision of channel estimation performed by a network device can be improved.

In the embodiments of the present invention, the pilot signal may be also referred to as a pilot sequence. A length of a pilot sequence, a length of a sequence of a pilot signal, and a sequence length of a pilot signal are a same concept.

Optionally, a fixed frequency band may be divided into a plurality of time ranges in a time domain, and duration of the time ranges may be the same or different. This may be understood as that available subcarriers of a terminal device are divided into a plurality of time ranges in the time domain, and subcarriers that can be selected as first subcarriers in each time range may be determined by the network device. For example, the network device may broadcast first information in advance. The first information may be used to indicate a subcarrier that can be specially used for carrying a pilot signal. For example, the first information may be used to indicate subcarriers that can be selected as first subcarriers in each time range. Alternatively, subcarriers that can be selected as first subcarriers in each time range may be specified in a communication standard instead of being broadcast by the network device. This is not limited in the embodiments of the present invention. In conclusion, the terminal device can learn in advance which subcarriers can be selected as first subcarriers in each time range, so that the terminal device can choose to use which of the selectable subcarriers as first subcarriers. For the network device, a pilot signal carried by a first subcarrier in a different time range is only used to decode a data signal in the time range. For example, a subcarrier 1 is used as a first subcarrier in both a first time range and a second time range. In this case, a pilot signal carried by the subcarrier 1 in the first time range is only used to decode a data signal sent in the first time range by a terminal device that sends the pilot signal and cannot be used to decode a data signal sent by the terminal device in another time range, so as to avoid a decoding error. If a terminal device needs to send a pilot signal in each different time range, the terminal device may select a subcarrier for each time range based on available subcarriers of the terminal device and a subcarrier that is indicated by first information and that can be selected in the time range as a subcarrier specially used for carrying a pilot signal. In this case, first subcarriers selected by a terminal device in different time ranges may be the same or different. For example, in a first time range, the terminal device selects M first subcarriers to carry a pilot signal, and in a second time range, the terminal device selects K first subcarriers to carry a pilot signal, where K is a positive integer less than N. Descriptions are provided below by using examples.

For example, the Narrowband IoT system includes a subcarrier 1 to a subcarrier 7. For example, subcarriers that can be selected as first subcarriers in a first time range are the subcarrier 1, the subcarrier 3, and the subcarrier 5. For example, subcarriers that can be selected as first subcarriers in a third time range are the subcarrier 3, the subcarrier 5, and the subcarrier 7. The first time range may be adjacent or may be not adjacent to the third time range. Each terminal device may not need to send a pilot signal in each time range. For example, a terminal device 1 and a terminal device 2 need to send a pilot signal in the first time range, a terminal device 3 and a terminal device 4 need to send a pilot signal in the third time range, and so on. In this case, for example, for the terminal device 1, the terminal device 1 learns that the subcarrier 1, the subcarrier 3, and the subcarrier 5 can be selected as first subcarriers in the first time range. For example, available subcarriers of the terminal device 1 are all the subcarriers included in the system, that is, the subcarrier 1 to the subcarrier 7. In this case, the terminal device 1 may select at least one of the subcarrier 1, the subcarrier 3, and the subcarrier 5 to send a pilot signal. The terminal device 1 may determine by itself a subcarrier to be selected from the subcarriers. The selection is flexible for the terminal device.

The foregoing example is still used. For example, in addition to sending a pilot signal in the first time range, the terminal device 1 also needs to send a pilot signal in a second time range, and the first time range may be adjacent or may be not adjacent to the second time range. In the first time range, the terminal device selects M first subcarriers to carry the pilot signal, and in the second time range, the terminal device may select K first subcarriers to carry the pilot signal, where K is a positive integer less than N. For example, the terminal device also learns in advance that the subcarrier 1 and the subcarrier 7 can be selected as first subcarriers in the second time range. In this case, for the terminal device 1, the first subcarriers selected in the first time range and the first subcarriers selected in the second time range may have an intersection. For example, the terminal device 1 selects the subcarrier 1 as a first subcarrier in both the first time range and the second time range, or the terminal device 1 selects the subcarrier 1 and the subcarrier 3 as first subcarriers in the first time range and selects the subcarrier 1 as a first subcarrier in the second time range. Alternatively, for the terminal device 1, the first subcarriers selected in the first time range and the first subcarriers selected in the second time range may not have an intersection. For example, the terminal device 1 selects the subcarrier 3 as a first subcarrier in the first time range and selects the subcarrier 1 as a first subcarrier in the second time range, or the terminal device 1 selects the subcarrier 3 as a first subcarrier in the first time range and selects the subcarrier 1 and the subcarrier 7 as first subcarriers in the second time range. That is, if a terminal device needs to send a pilot signal in a plurality of time ranges, positions and quantities of first subcarriers selected by the terminal device in different time ranges may be the same or different. The selection is flexible for the terminal device, and the terminal device can perform more suitable selection based on an actual situation.

Optionally, for example, the terminal device has N available subcarriers, and the terminal device selects, from the N available subcarriers, M first subcarriers to carry a pilot signal, where N is an integer greater than or equal to 2, and M is a positive integer less than N. In this case, if M=1, the M first subcarriers may be located in the middle of the N subcarriers as much as possible; if M is greater than or equal to 2, there may be at least one second subcarrier between every two of the M first subcarriers. Because a channel estimation value obtained based on a pilot signal may be used to decode a data signal carried by a second subcarrier, the pilot signal should represent a status of the second subcarrier as much as possible. A more accurate channel estimation result may be obtained by selecting first subcarriers that is in the middle between second subcarriers as much as possible.

For example, if the available subcarriers of the terminal device are the subcarrier 1, the subcarrier 2, and the subcarrier 3 that are successively adjacent, the terminal device may select the subcarrier 2 as a first subcarrier for carrying a pilot signal. In this case, M=1.

For example, if the available subcarriers of the terminal device are the subcarrier 1, the subcarrier 2, the subcarrier 3, the subcarrier 4, and the subcarrier 5 that are successively adjacent, the terminal device may select the subcarrier 2 and the subcarrier 4 as first subcarriers for carrying a pilot signal. In this case, M=2. Alternatively, the terminal device may select the subcarrier 3 as a first subcarrier for carrying a pilot signal. In this case, M=1. Certainly, the terminal device may perform selection in another manner.

In a selectable range, a quantity of subcarriers selected by the terminal device to transmit a pilot signal may be determined based on a specific situation. For example, if a quantity of available subcarriers of the terminal device is relatively large, and a quantity of subcarriers that can be selected to be specially used for carrying a pilot signal is also relatively large, the terminal device may select a plurality of subcarriers to transmit the pilot signal; or if a quantity of available subcarriers of the terminal device is relatively small and/or a quantity of subcarriers that are in the available subcarriers of the terminal device and that can be selected to be specially used for carrying a pilot signal is relatively small, the terminal device may select one subcarrier to transmit the pilot signal. Alternatively, for example, if a quantity of available idle subcarriers of the terminal device is relatively large, and a quantity of subcarriers that are in the idle subcarriers and that can be selected to be specially used for carrying a pilot signal is also relatively large, the terminal device may select a plurality of subcarriers to transmit the pilot signal; or if a quantity of available idle subcarriers of the terminal device is relatively small and/or a quantity of subcarriers that are in the idle subcarriers and that can be selected to be specially used for carrying a pilot signal is relatively small, the terminal device may select one subcarrier to transmit the pilot signal.

Optionally, if the terminal device selects a plurality of subcarriers as first subcarriers, that is, M is an integer greater than or equal to 2, there may be at least one second subcarrier between every two of the M first subcarriers. That is, the first subcarriers used to carry a pilot signal may be located as evenly as possible between subcarriers used to carry a data signal. Because a channel estimation value obtained based on a pilot signal may be used to decode a data signal carried by a second subcarrier, the pilot signal should represent a status of the second subcarrier as much as possible. A more accurate channel estimation result may be obtained by placing the first subcarriers in the middle as much as possible.

Optionally, a total bandwidth of the available subcarriers of the terminal device may be less than a coherence bandwidth of a radio channel. Alternatively, it may be understood in the following manner: For example, the terminal device has N available subcarriers, in which M subcarriers are first subcarriers, and remaining N-M subcarriers are second subcarriers. In this case, for the terminal device, a sum of bandwidths of the M first subcarriers and the N-M second subcarriers may be less than the coherence bandwidth of the radio channel. The radio channel herein may be a radio channel between the terminal device and the network device. The coherence bandwidth refers to that any two frequency components in a particular frequency range have very strong magnitude correlation. That is, in a range of the coherence bandwidth, a multi-path channel has a constant gain and linear phase. Because the network device uses a pilot signal carried on a first subcarrier to perform channel estimation, and uses a channel estimation value to decode a data signal carried on a second subcarrier, a radio channel on the first subcarrier needs to be not much different from a radio channel on the second subcarrier. Otherwise, decoding may fail. In addition, within a coherence bandwidth of a channel, the channel is basically unchanged in the frequency domain. Therefore, to improve a decoding success rate, the total bandwidth of the available subcarriers of the terminal device, that is, a total bandwidth of all available first subcarriers of the terminal device and all available second subcarriers of the terminal device, may be made less than the coherence bandwidth of the radio channel. Optionally, usually, a larger difference between the total bandwidth of the available subcarriers of the terminal device and the coherence bandwidth of the radio channel indicates a higher decoding success rate provided that the total bandwidth of the available subcarriers of the terminal device is less than the coherence bandwidth of the radio channel.

Optionally, the total bandwidth of the available subcarriers of the terminal device may be greatly less than the coherence bandwidth of the radio channel. For example, the total bandwidth of the available subcarriers of the terminal device may be less than one-tenth of the coherence bandwidth of the radio channel. For example, if the coherence bandwidth of the radio channel is 200 kHz, the total bandwidth of the available subcarriers of the terminal device may be less than 20 kHz.

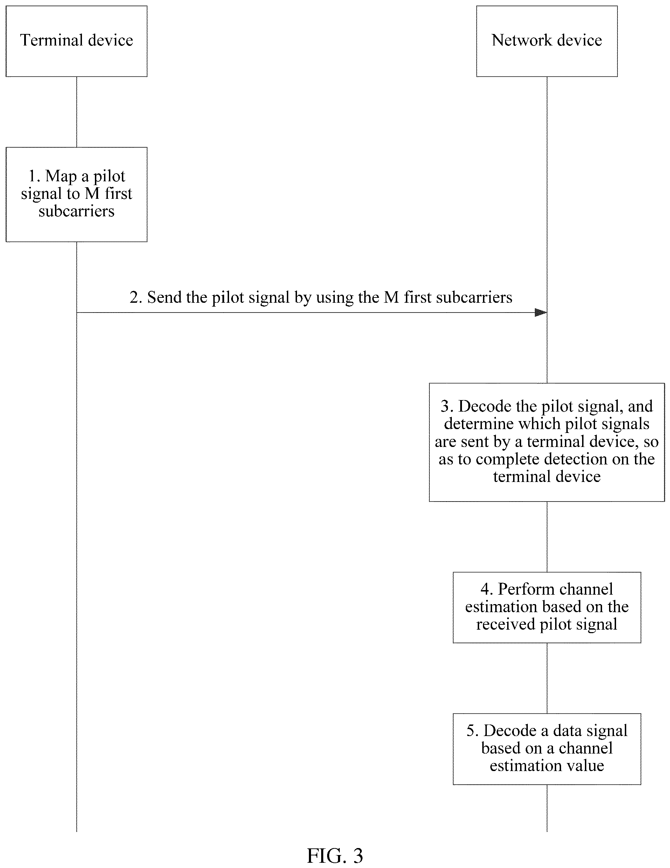

Referring to FIG. 3, FIG. 3 is an interaction flowchart of a pilot signal sending and receiving process according to an embodiment of the present invention. The solution provided in FIG. 3 may be implemented in the application scenario shown in FIG. 2, and a terminal device mentioned below may be any terminal device in FIG. 2.
1. The terminal device maps a pilot signal to M first subcarriers.

For a manner in which the terminal device selects the M first subcarriers, refer to the foregoing descriptions.

Optionally, when the terminal device is to send a pilot signal, the terminal device may map the pilot signal to the selected M first subcarriers. For how the terminal device maps the pilot signal to the subcarriers, refer to a manner in the prior art. Optionally, the pilot signal may be placed along a time axis on any first subcarrier. A length of a sequence of the pilot signal may be determined based on a plurality of factors such as a change in a radio channel, a superimposition status of the pilot signal, and channel estimation performance. This is not limited in this embodiment of the present invention.

In this embodiment of the present invention, the length of the sequence of the pilot signal is changeable. Compared with a solution of directly applying an existing pilot signal sending solution in an LTE system to a Narrowband IoT system, in the technical solution in this embodiment of the present invention, because a pilot signal is carried by using a dedicated subcarrier to reduce a restriction on the pilot signal in a frequency domain, the length of the sequence of the pilot signal is increased to some extent, thereby improving channel estimation precision of a network device.
2. The terminal device sends the pilot signal to a network device by using the M first subcarriers.

Optionally, in addition to sending the pilot signal to the network device by using the M first subcarriers, the terminal device may further send a data signal to the network device by using N-M second subcarriers. In this case, the network device may receive the pilot signal by using the M first subcarriers and may receive, by using the N-M second subcarriers, the data signal sent by the terminal device.

Optionally, in a time range, the terminal device may send one pilot signal or periodically send a plurality of pilot signals on any one of the M first subcarriers. For example, in a first time range, the terminal device may periodically repeatedly send a same pilot signal or periodically send different pilot signals on any one or more first subcarriers selected in the first time range. A same pilot signal may be periodically repeatedly sent or different pilot signals may be periodically sent on one first subcarrier. In this way, the network device can perform channel estimation based on a plurality of pilot signals, and comprehensively consider a plurality of channel estimation results, so that channel estimation accuracy can be improved.

Optionally, for a terminal device, if M selected in a time range is greater than or equal to 2, periods based on which the terminal device sends a pilot signal on different first subcarriers may be the same.
3. After receiving a data signal and the pilot signal, the network device may decode the pilot signal, and determine which pilot signals are sent by the terminal device, so as to complete detection on the terminal device.

Optionally, because a potential demand of the IoT system is to implement massive connections, that is, to carry as many terminal devices as possible on limited resources, to enable limited time-frequency resources to carry as many pilot signals as possible to improve a total system capacity, the pilot signals may be transmitted by means of superimposition. For example, in a time range, for a first subcarrier, a pilot signal carried on a position of the first subcarrier may be a result of superimposition of a plurality of pilot signals. The superimposed pilot signals are from different terminal devices. In this case, a sequence on which whether superimposition exists is easily determined may be preferably selected as a pilot signal, so as to make a process of determining whether superimposition exists on the pilot signal as simple and fast as possible.

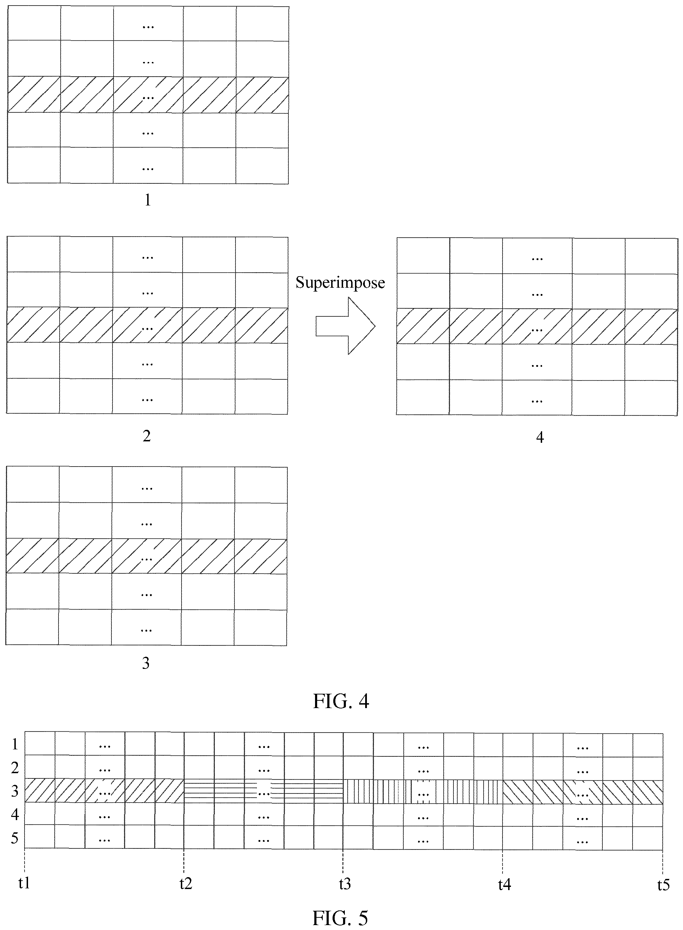

For example, referring to FIG. 4, four boxes in FIG. 4 respectively show subcarriers used by four terminal devices to carry a data signal and subcarriers used by the four terminal devices to carry pilot signals in a first time range. The four terminal devices transmit the pilot signals in a manner provided in this embodiment of the present invention. Subcarriers represented by oblique-line parts in the four boxes in FIG. 4 are subcarriers used to carry the pilot signals. For example, if the four subcarriers separately carry one pilot signal, the four pilot signals may be transmitted by means of superimposition. That is, it may be considered that the four pilot signals are transmitted after being superimposed as a pilot signal carried on a subcarrier that is in a fourth box and that is used to carry a pilot signal. That is, it may be considered as that the four subcarriers are used to represent a same subcarrier, and a pilot signal carried on the subcarrier is a result of superimposition of four pilot signals.

For example, ZC (Zadoff-Chu) sequences may be selected as the pilot signals. The ZC sequences have a relatively low peak to average power ratio (Peak to Average Power Ratio, PAPR); good autocorrelation; relatively low mutual correlation, which, for example, is 0 in a specific range; and relatively good orthogonality. Therefore, the ZC sequences can be well distinguished after being superimposed.

For example, the terminal device uses a ZC sequence as a pilot signal. The network device stores a set of pilot signals, that is, stores ZC sequences allocated by the system to the network device. The network device receives, for example, a ZC sequence 1 used as a pilot signal, and may perform a correlation operation on the received ZC sequence 1 and each ZC sequence in the stored set of pilot signals. For example, the ZC sequence 1 is denoted as *y*₁, and the set of pilot signals stored on the network device includes a total of K ZC sequences. For example, the set of pilot signals is {*p*₁ *p*₂ ... *pₖ*}. A correlation operation is performed on *y*₁ and each ZC sequence in *p*₁, *p*₂, ..., and *p_{K}*. If an absolute value of a result *r_{K}* of the correlation operation on *y*₁ and *p_{K}* is greater than a threshold, which may be, for example, specified in a standard or set by the network device, it indicates that *p_{K}* is sent by the terminal device as a pilot signal. That is, the system includes a terminal device, and the terminal device sends *p_{K}* as a pilot signal, where ***K***∈{**1,2,L**, ***K***}.

Because pilot signals are allowed to be superimposed, in a process of performing the correlation operation, absolute values of results of correlation operations on *y*₁ and a plurality of ZC sequences in *p*₁, *p*₂, ..., and *p_{K}* may be greater than the threshold. In this manner, it can be detected which pilot signals are sent by the terminal device, and it can also be determined that the pilot signals are superimposed.
4. The network device performs channel estimation based on the received pilot signal.

In an example in which a ZC sequence is used as a pilot signal, when the network device performs a correlation operation on the received pilot signal and a pilot signal in the stored set of pilot signals, a value obtained through the correlation operation is a channel estimation value obtained based on the received pilot signal. For example, a correlation operation is performed on a pilot signal *y*₁ received in a first time range by using a first subcarrier 1 and each ZC sequence in *p*₁, *p*₂, ..., and *p_{K}*. If an absolute value of a result *r_{K}* of the correlation operation on *y*₁ and *p_{K}* is greater than a threshold, it indicates that a terminal device sends *p_{K}* as a pilot signal in the first time range, and *r_{K}* is a channel estimation value of the pilot signal *p_{K}* carried on the first subcarrier 1, where ***K***∈{**1,2,L, *K***}.

If pilot signals are superimposed and the superimposed pilot signals are from different terminal devices, the network device may first determine a terminal device to which each superimposed pilot signal belongs. In this way, a data signal sent by each terminal device may be decoded based on a channel estimation value of the terminal device, and some other possible estimation operations may be performed on the terminal device, so as to prevent a pilot signal sent by one terminal device from being used to decode a data signal sent by another terminal device, thereby avoiding an error and improving a decoding success rate.

Optionally, after performing channel estimation based on a pilot signal carried on any first subcarrier in the first time range, the network device may decode, based on an obtained channel estimation value, a data signal carried on at least one second subcarrier in the first time range. That is, in a same time range, a pilot signal carried on one first subcarrier may be used to decode a data signal carried on at least one second subcarrier. This helps improve decoding efficiency. Certainly, this is on the premise that the pilot signal and the data signal are from a same terminal device.

Optionally, in addition to performing channel estimation based on the pilot signal, the network device may further perform time offset estimation, frequency offset estimation, and the like on the terminal device based on the pilot signal. In this case, after performing step 3, the network device may first perform time offset estimation, frequency offset estimation, and the like on the terminal device based on the pilot signal, and then perform step 4, that is, perform channel estimation. The time offset estimation may include uplink timing advance (Timing Advance, TA) estimation. The time offset estimation and frequency offset estimation processes may be performed in any order. For processes such as time offset estimation and frequency offset estimation, refer to an existing solution. For example, in an example in which a ZC sequence is used as a pilot signal, for the time offset estimation process, refer to a time offset estimation process for a physical random access channel (Physical Random Access Channel, PRACH) in an LTE system, and details are not described herein.

The network device may receive a plurality of pilot signals sent by a same terminal device in a same time range. In this case, optionally, the network device may perform a plurality of times of channel estimation, and may decode a data signal in the time range by comprehensively considering results of the plurality of times of channel estimation, so as to improve the decoding success rate.

The network device may receive a plurality of pilot signals sent by a same terminal device in a same time range. In this case, similarly, the network device may perform a plurality of times of time offset estimation and a plurality of times of frequency offset estimation, and may decode a data signal in the time range by comprehensively considering results of the plurality of times of time offset estimation and the plurality of times of frequency offset estimation, so as to improve the decoding success rate.

5. The network device may use a channel estimation value of each terminal device to decode a data signal sent by the terminal device in the time range, so as to obtain data sent by the terminal device.

Optionally, if the network device further performs time offset estimation and frequency offset estimation, the network device may use at least one of the channel estimation value of each terminal device and results such as time offset estimation and frequency offset estimation to decode the data signal sent by the terminal device in the time range, so as to obtain the data sent by the terminal device.

The following uses two examples to briefly describe a process of performing channel estimation and decoding a data signal by the network device.

### Example 1:

Referring to FIG. 5, available subcarriers of a terminal device are, for example, subcarriers 1, 2, 3, 4, and 5 in FIG. 5. For example, t1 to t5 in FIG. 5 is a first time range, and for example, the subcarrier 3 and the subcarrier 4 can be selected as first subcarriers in the first time range. For example, if the terminal device selects, in the first time range, the subcarrier 3 as a subcarrier for carrying a pilot signal, the subcarrier 1, the subcarrier 2, the subcarrier 4, and the subcarrier 5 are used to carry a data signal. For example, the terminal device sends a total of four pilot signals in the first time range, namely, a pilot signal 1, a pilot signal 2, a pilot signal 3, and a pilot signal 4. In FIG. 5, a part shown by backslashes in the subcarrier 3 represents the pilot signal 1, a part shown by horizontal lines in the subcarrier 3 represents the pilot signal 2, a part shown by vertical lines in the subcarrier 3 represents the pilot signal 3, and a part shown by slashes in the subcarrier 3 represents the pilot signal 4.

The network device may perform processing such as a correlation operation separately on the four pilot signals and each pilot signal in the stored set of pilot signals, to obtain four channel estimation values. For example, the four channel estimation values are *h*₁, *h*₂, *h*₃, and *h*₄. Optionally, the network device may use each of the four channel estimation values to decode a data signal in a sub-time range in which a corresponding pilot signal exists, that is, may use *h*₁ to decode a data signal n1, use *h*₂ to decode a data signal n2, use *h*₃ to decode a data signal n3, and use *h*₄ to decode a data signal n4. n1 represents data signals transmitted by using the subcarrier 1, the subcarrier 2, the subcarrier 4, and the subcarrier 5 in a sub-time range in which the pilot signal 1 exists, n2 represents data signals transmitted by using the subcarrier 1, the subcarrier 2, the subcarrier 4, and the subcarrier 5 in a sub-time range in which the pilot signal 2 exists, n3 represents data signals transmitted by using the subcarrier 1, the subcarrier 2, the subcarrier 4, and the subcarrier 5 in a sub-time range in which the pilot signal 3 exists, and n4 represents data signals transmitted by using the subcarrier 1, the subcarrier 2, the subcarrier 4, and the subcarrier 5 in a sub-time range in which the pilot signal 4 exists. That is, n1, n2, n3, and n4 each represent data signals carried on a plurality of subcarriers, and do not represent a single data signal. For example, n1 represents data signals carried on the subcarrier 1, the subcarrier 2, the subcarrier 4, and the subcarrier 5 from time points t1 to t2 in FIG. 5, n2 represents data signals carried on the subcarrier 1, the subcarrier 2, the subcarrier 4, and the subcarrier 5 from time points t2 to t3 in FIG. 5, n3 represents data signals carried on the subcarrier 1, the subcarrier 2, the subcarrier 4, and the subcarrier 5 from time points t3 to t4 in FIG. 5, and n4 represents data signals carried on the subcarrier 1, the subcarrier 2, the subcarrier 4, and the subcarrier 5 from time points t4 to t5 in FIG. 5.

Alternatively, optionally, after the channel estimation values *h*₁, *h*₃, and *h*₄ are obtained, the network device may calculate an average value of the four channel estimation values, for example, may perform time-domain interpolation processing on the four channel estimation values. For example, a time-domain interpolation result may be denoted as **h̃**= *f*(*h*₁,*h*₂,*h*₃,*h*₄), where *f*( ) is a time-domain interpolation function. The network device may use the channel estimation value **h̃** obtained after the time-domain interpolation to decode all the data signals, that is, n1, n2, n3, and n4, carried on the subcarrier 1, the subcarrier 2, the subcarrier 4, and the subcarrier 5 in FIG. 5.

The foregoing provides two manners of decoding a data signal, and the network device may select either of the two manners to decode a data signal.

Optionally, when selecting a decoding manner, the network device may consider a range of a sparse code division multiple access (Sparse Code Multiple Access, SCMA) block. For example, if n1, n2, n3, and n4 respectively correspond to four SCMA blocks, the network device may select the first decoding manner described above, that is, use each of *h*₁, *h*₂, *h*₃, and *h*₄ to decode the data signal in the sub-time range in which the corresponding pilot signal exists. For another example, if n1, n2, n3, and n4 correspond to a same SCMA block, that is, the entire FIG. 5 represents one SCMA block, the network device may select the second decoding manner described above, that is, use the channel estimation value **h̃** obtained after performing time-domain interpolation on *h*₁, *h*₂, *h*₃, and *h*₄ to decode all the data signals, that is, n1, n2, n3, and n4, carried on the subcarrier 1, the subcarrier 2, the subcarrier 4, and the subcarrier 5 in FIG. 5.

### Example 2:

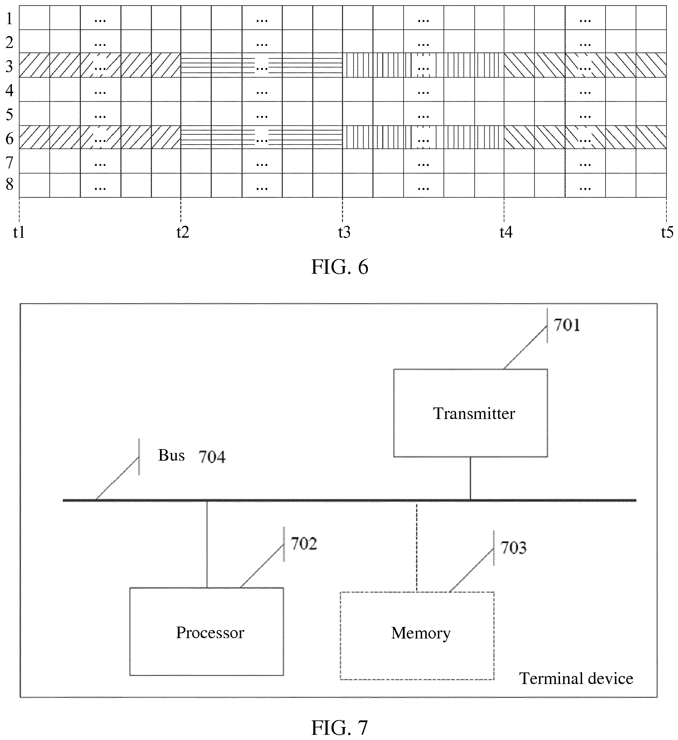

Referring to FIG. 6, available subcarriers of a terminal device are, for example, a subcarrier 1, a subcarrier 2, a subcarrier 3, a subcarrier 4, a subcarrier 5, a subcarrier 6, a subcarrier 7, and a subcarrier 8 in FIG. 6. For example, t1 to t5 in FIG. 6 is a first time range, and for example, the subcarrier 3, the subcarrier 6, the subcarrier 7, and the subcarrier 8 can be selected as first subcarriers in the first time range. For example, the terminal device selects the subcarrier 3 and the subcarrier 6 as subcarriers for carrying pilot signals. For example, the terminal device sends a total of eight pilot signals in the first time range, namely, a pilot signal 1, a pilot signal 2, a pilot signal 3, a pilot signal 3, a pilot signal 4, a pilot signal 5, a pilot signal 6, a pilot signal 7, and a pilot signal 8. In FIG. 6, a part shown by backslashes in the subcarrier 3 represents the pilot signal 1, a part shown by horizontal lines in the subcarrier 3 represents the pilot signal 2, a part shown by vertical lines in the subcarrier 3 represents the pilot signal 3, a part shown by slashes in the subcarrier 3 represents the pilot signal 4, a part shown by backslashes in the subcarrier 6 represents the pilot signal 5, a part shown by horizontal lines in the subcarrier 6 represents the pilot signal 6, a part shown by vertical lines in the subcarrier 6 represents the pilot signal 7, and a part shown by slashes in the subcarrier 6 represents the pilot signal 8. The pilot signal 1 and the pilot signal 5 occupy a same time-domain resource. The same applies to the pilot signal 2 and the pilot signal 6, the pilot signal 3 and the pilot signal 7, and the pilot signal 4 and the pilot signal 8.

The network device may perform processing such as a correlation operation separately on the eight pilot signals and each pilot signal in the stored set of pilot signals, to obtain eight channel estimation values. For example, eight channel estimation values of the pilot signal 1, the pilot signal 2, the pilot signal 3, the pilot signal 4, the pilot signal 5, the pilot signal 6, the pilot signal 7, and the pilot signal 8 are *h*₁, *h*₂, *h*₃, *h*₄, *h*₅, *h*₆, *h*₇, and *h*₈ respectively.

The network device may decode a data signal in different manners based on the eight channel estimation values. Descriptions are provided below by using examples.
Manner 1: Optionally, the network device may first calculate an average value of every two channel estimation values that are in a same sub-time range in the eight channel estimation values. For example, if the pilot signal 1 and the pilot signal 5 are in a same sub-time range, an average value of *h*₁ and *h*₅ may be calculated. For example, interpolation may be performed on *h*₁ and *h*₅. In this case, the interpolation is frequency-domain interpolation. For example, an interpolation result of *h*₁ and *h*₅ is *h*₁₅. Likewise, it may be calculated that an interpolation result of *h*₂ and *h*₆ is, for example, *h*₂₆, an interpolation result of *h*₃ and *h*₇ is, for example, *h*₃₇, and an interpolation result of *h*₄ and *h*₈ is, for example, *h*₄₈. The network device may use each of the four interpolation results to decode a data signal in a sub-time range in which a corresponding pilot signal exists, that is, may use *h*₁₅ to decode the data signal n1, use *h*₂₆ to decode the data signal n2, use *h*₃₇ to decode the data signal n3, and use *h*₄₈ to decode the data signal n4. n1 represents data signals transmitted by using the subcarrier 1, the subcarrier 2, the subcarrier 4, the subcarrier 5, the subcarrier 7, and the subcarrier 8 in the sub-time range in which the pilot signal 1 and the pilot signal 5 exist, n2 represents data signals transmitted by using the subcarrier 1, the subcarrier 2, the subcarrier 4, the subcarrier 5, the subcarrier 7, and the subcarrier 8 in a sub-time range in which the pilot signal 2 and the pilot signal 6 exist, n3 represents data signals transmitted by using the subcarrier 1, the subcarrier 2, the subcarrier 4, the subcarrier 5, the subcarrier 7, and the subcarrier 8 in a sub-time range in which the pilot signal 3 and the pilot signal 7 exist, and n4 represents data signals transmitted by using the subcarrier 1, the subcarrier 2, the subcarrier 4, the subcarrier 5, the subcarrier 7, and the subcarrier 8 in a sub-time range in which the pilot signal 4 and the pilot signal 8 exist. That is, n1, n2, n3, and n4 each represent data signals carried on a plurality of subcarriers, and do not represent a single data signal. For example, n1 represents data signals carried on the subcarrier 1, the subcarrier 2, the subcarrier 4, the subcarrier 5, the subcarrier 6, and the subcarrier 8 from time points t1 to t2 in FIG. 6, n2 represents data signals carried on the subcarrier 1, the subcarrier 2, the subcarrier 4, the subcarrier 5, the subcarrier 7, and the subcarrier 8 from time points t2 to t3 in FIG. 6, n3 represents data signals carried on the subcarrier 1, the subcarrier 2, the subcarrier 4, the subcarrier 5, the subcarrier 7, and the subcarrier 8 from time points t3 to t4 in FIG. 6, and n4 represents data signals carried on the subcarrier 1, the subcarrier 2, the subcarrier 4, the subcarrier 5, the subcarrier 7, and the subcarrier 8 from time points t4 to t5 in FIG. 6.
Manner 2: Optionally, after the channel estimation values *h*₁, *h*₂, *h*₃, *h*₄, *h*₅, *h*₆, *h*₇, and *h*₈ are obtained, the network device may calculate an average value of the eight channel estimation values, for example, may perform interpolation processing on the eight channel estimation values. The network device may use the average value of the eight channel estimation values obtained after the interpolation to decode all the data signals, that is, n1, n2, n3, and n4 in FIG. 6.
Manner 3: Optionally, after the channel estimation values *h*₁, *h*₂, *h*₃, *h*₄, *h*₅, *h*₆, *h*₇, and *h*₈ are obtained, the network device may calculate an average value of *h*₁, *h*₂, *h*₃, and *h*₄, for example, may perform time-domain interpolation on *h*₁, *h*₂, *h*₃, and *h*₄. For example, an interpolation result is *h*₁₂₃₄. In addition, the network device may calculate an average value of *h*₅, *h*₆, *h*₇, and *h*₈, for example, may perform time-domain interpolation on *h*₅, *h*₆, *h*₇, and *h*₈. For example, an interpolation result is *h*₅₆₇₈. The network device may further calculate an average value of the two interpolation results, and for example, may further perform interpolation on the two interpolation results. In this case, the interpolation may be considered as frequency-domain interpolation. For example, a finally obtained interpolation result is *hₐ*. The network device may use *hₐ* to decode all the data signals, that is, n1, n2, n3, and n4 in FIG. 6.
Manner 4: Optionally, after the channel estimation values *h*₁, *h*₂, *h*₃, *h*₄, *h*₅, *h*₆, *h*₇, and *h*₈ are obtained, the network device may calculate an average value of every two channel estimation values that are in a same sub-time range in the eight channel estimation values. For example, if the pilot signal 1 and the pilot signal 5 are in a same sub-time range, an average value of *h*₁ and *h*₅ may be calculated. For example, interpolation may be performed on *h*₁ and *h*₅. For example, an interpolation result of *h*₁ and *h*₅ is *h*₁₅. Likewise, it may be calculated that an interpolation result of *h*₂ and *h*₆ is, for example, *h*₂₆, an interpolation result of *h*₃ and *h*₇ is, for example, *h*₃₇, and an interpolation result of *h*₄ and *h*₈ is, for example, *h*₄₈. Then, the network device may calculate an average value of the four interpolation results, and for example, may further perform interpolation on the four interpolation results. In this case, the interpolation may be considered as time-domain interpolation. For example, a finally obtained interpolation result is *h_{b}*. The network device may use *h_{b}* to decode all the data signals, that is, n1, n2, n3, and n4, carried on the subcarrier 1, the subcarrier 2, the subcarrier 4, the subcarrier 5, the subcarrier 7, and the subcarrier 8 in FIG. 6.

The foregoing provides several manners of decoding a data signal, and the network device may select, based on a situation, any one of the manners to decode a data signal.

Optionally, when selecting a decoding manner, the network device may consider a range of an SCMA block. For example, if n1, n2, n3, and n4 correspond to four SCMA blocks respectively, the network device may select Manner 1 in Example 2 to decode the data signal. For example, if n1, n2, n3, and n4 correspond to a same SCMA block respectively, that is, the entire FIG. 6 represents one SCMA block, the network device may select Manner 2, 3, or 4 in Example 2 to decode the data signal.

The following describes a device in the embodiments of the present invention with reference to the accompanying drawings.

Referring to FIG. 7, based on a same inventive concept, a terminal device is provided. The terminal device may include a transmitter 701, a processor 702, and a memory 703.

The processor 702 may include, for example, a central processing unit (CPU) or an application-specific integrated circuit (Application Specific Integrated Circuit, ASIC), and may be one or more integrated circuits executed by a control program, a hardware circuit developed by using a field programmable gate array (Field Programmable Gate Array, FPGA), or a baseband chip.

There may be one or more memories 703. The memory 703 may include a read-only memory (Read-Only Memory, ROM), a random access memory (Random Access Memory, RAM), and a magnetic disk memory. The memory 703 may be, for example, a cache in the processor 702, or may be a storage module included in the terminal device. In FIG. 7, the memory 703 is shown by a dashed line box.

The transmitter 701 is configured to perform network communication with an external device, and for example, may communicate with the external device by using a network such as an Ethernet, a radio access network, or a wireless local area network.

The memories 703 and the transmitter 701 may be connected to the processor 702 by using a bus 704, or the memories 703 and the transmitter 701 may be connected to the processor 702 by using a dedicated connecting line. That the transmitter 701 and the memories 703 are connected to the processor 702 by using the bus 704 is used as an example in FIG. 7.

Code corresponding to the foregoing method is burned into a chip by designing and programming the processor 702, so that the chip can perform the foregoing method shown in FIG. 3 during operation. How to design and program the processor 702 is a technology known to a person skilled in the art, and details are not described herein.

The terminal device may be configured to perform the method in FIG. 3, and for example, may be the terminal device in FIG. 3. Therefore, for functions implemented by the units in the terminal device, refer to the descriptions in the foregoing method part, and details are not described again.

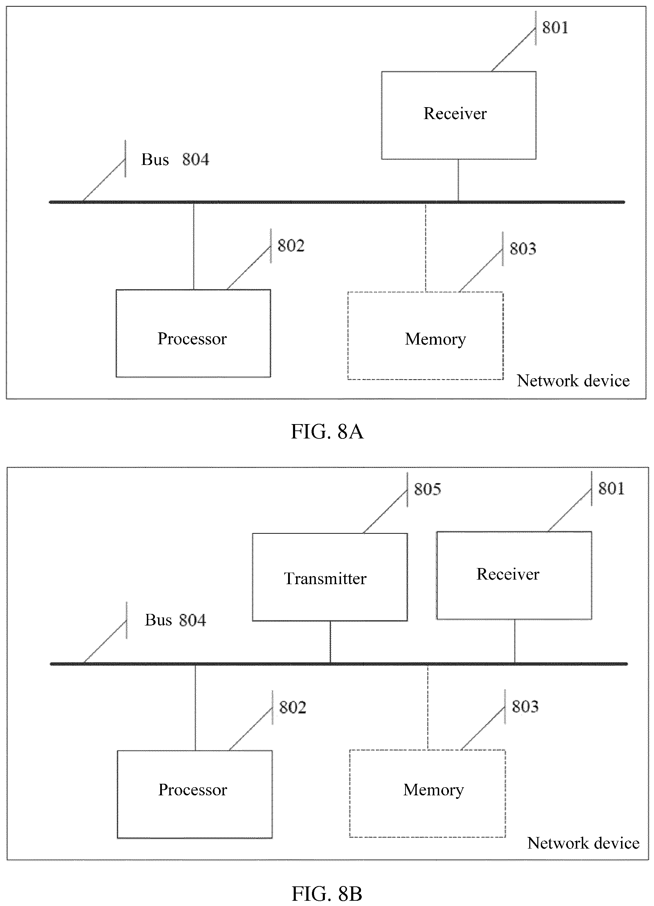

Referring to FIG. 8A, based on the same inventive concept, a network device is provided. The network device may include a receiver 801, a processor 802, and a memory 803. Optionally, referring to FIG. 8B, the network device may further include a transmitter 805.

The processor 802 may include, for example, a CPU or an ASIC, and may be one or more integrated circuits executed by a control program, a hardware circuit developed by using an FPGA, or a baseband chip.

There may be one or more memories 803. The memory 803 may include a ROM, a RAM, and a magnetic disk memory. The memory 803 may be, for example, a cache in the processor 802, or may be a storage module included in the network device. In FIG. 8A and FIG. 8B, the memory 803 is shown by a dashed line box.

The receiver 801 is configured to perform network communication with an external device, and for example, may communicate with the external device by using a network such as an Ethernet, a radio access network, or a wireless local area network.

The transmitter 805 is configured to perform network communication with an external device, for example, may communicate with the external device by using a network such as an Ethernet, a radio access network, or a wireless local area network.

The memories 803, the receiver 801, and the transmitter 805 may be connected to the processor 802 by using a bus 804, or the memories 803, the receiver 801, and the transmitter 805 may be connected to the processor 802 by using a dedicated connecting line. That the receiver 801, the memories 803, and the transmitter 805 are connected to the processor 802 by using the bus 804 is used as an example in FIG. 8A and FIG. 8B.

Code corresponding to the foregoing method is burned into a chip by designing and programming the processor 802, so that the chip can perform the foregoing method shown in FIG. 3 during operation. How to design and program the processor 802 is a technology known to a person skilled in the art, and details are not described herein.

The network device may be configured to perform the method in FIG. 3, and for example, may be the network device in FIG. 3. Therefore, for functions implemented by the units in the network device, refer to the descriptions in the foregoing method part, and details are not described again.

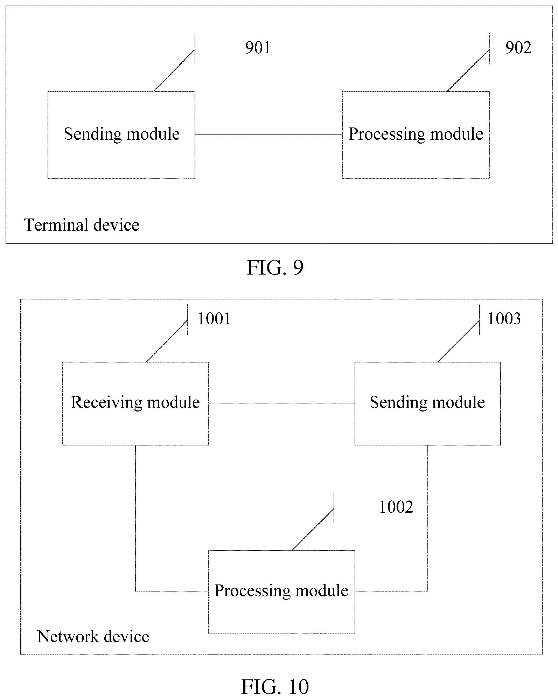

Referring to FIG. 9, based on the same inventive concept, another terminal device is further provided. The terminal device may include a sending module 901 and a processing module 902.

During actual application, a physical device corresponding to the sending module 901 may be the transmitter 701 in FIG. 7, and a physical device corresponding to the processing module 902 may be the processor 702 in FIG. 7.

The terminal device may be configured to perform the method in FIG. 3, and for example, may be the terminal device in FIG. 3. Therefore, for functions implemented by the units in the terminal device, refer to the descriptions in the foregoing method part, and details are not described again.

Referring to FIG. 10, based on the same inventive concept, another network device is further provided. The network device may include a receiving module 1001 and a processing module 1002. Optionally, the network device may further include a sending module 1003, which is also shown in FIG. 10.

During actual application, a physical device corresponding to the receiving module 1001 may be the receiver 801 in FIG. 8, a physical device corresponding to the processing module 1002 may be the processor 802 in FIG. 8, and a physical device corresponding to the sending module 1003 may be the transmitter 805 in FIG. 8.

The network device may be configured to perform the method in FIG. 3, and for example, may be the network device in FIG. 3. Therefore, for functions implemented by the units in the network device, refer to the descriptions in the foregoing method part, and details are not described again.

The terminal device may select, from available subcarriers of the terminal device, a first subcarrier specially used for transmitting a pilot signal, and may use the first subcarrier to carry the pilot signal when sending the pilot signal. In this way, there is no need to use all the available subcarriers of the terminal device to carry the pilot signal, and even if a quantity of available subcarriers of the terminal device is relatively small, the terminal device can select a subcarrier from the available subcarriers to transmit the pilot signal, thereby avoiding a restriction on a sequence of the pilot signal in a frequency domain as much as possible. When the network device performs channel estimation based on such a pilot signal, a relatively accurate channel estimation value is obtained, so that performance is relatively good.

In the present invention, it should be understood that the disclosed device and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. A part or all of the units can be selected based on actual needs to achieve the embodiments of the present invention.

Various functional units in the embodiments of the present invention may be integrated into one processing unit, or various units may be independent physical modules.

When the integrated unit is implemented in the form of a software functional unit and sold or used as an independent product, the integrated unit may be stored in a computer-readable storage medium. Based on such an understanding, all or a part of technical solutions of the present invention may be implemented in a form of a software product. The software product is stored in a storage medium and includes several instructions for instructing a computer device, which may be a personal computer, a server, or a network device, or a processor (processor) to perform all or a part of the steps of the methods described in the embodiments of the present invention. The foregoing storage medium includes: any medium that can store program code, such as a USB flash drive (Universal Serial Bus flash drive), a removable hard disk, a ROM, a RAM, a magnetic disk, or an optical disc.

The foregoing embodiments are merely used to describe the technical solutions of the present invention. The foregoing embodiments are merely intended to help understand the method of the embodiments of the present invention, and shall not be construed as a limitation on the embodiments of the present invention. Any variation or replacement readily figured out by a person skilled in the art shall fall within the protection scope of the present invention.

## Claims

1. A pilot signal sending method, comprising:
mapping, by a terminal device, a pilot signal to M first subcarriers, wherein each first subcarrier is specially used for carrying a pilot signal, a quantity of available subcarriers of the terminal device is N, and M is a positive integer less than N; and
sending, by the terminal device, the pilot signal to a network device by using the M first subcarriers.

2. The method according to claim 1, wherein if M is greater than or equal to 2, there is at least one second subcarrier between every two of the M first subcarriers, and the second subcarrier is used to carry a data signal sent by the terminal device.

3. The method according to claim 1, wherein if M is equal to 1, the M first subcarriers are located in the middle of the available subcarriers of the terminal device.

4. The method according to any one of claims 1 to 3, wherein a total bandwidth of the available subcarriers of the terminal device is less than a coherence bandwidth of a radio channel between the terminal device and the network device.

5. The method according to any one of claims 1 to 4, wherein
the mapping, by a terminal device, a pilot signal to M first subcarriers comprises:
mapping, by the terminal device, the pilot signal to the M first subcarriers in a first time range; and
the method further comprises: mapping, by the terminal device, the pilot signal to K first subcarriers in a second time range, wherein K is a positive integer less than N.

6. A channel estimation method, comprising:
receiving, by a network device by using M first subcarriers, a pilot signal sent by a terminal device, wherein each first subcarrier is specially used for carrying a pilot signal, a quantity of available subcarriers allocated by the network device to the terminal device is N, and M is a positive integer less than N; and
performing, by the network device, channel estimation based on the received pilot signal.

7. The method according to claim 6, wherein if M is greater than or equal to 2, there is at least one second subcarrier between every two of the M first subcarriers, and the second subcarrier is used to carry a data signal sent by the terminal device.

8. The method according to claim 6, wherein if M is equal to 1, the M first subcarriers are located in the middle of the available subcarriers of the terminal device.

9. The method according to claim 8, wherein the method further comprises:
after receiving a first pilot signal by using one of the M first subcarriers, performing, by the network device, a correlation operation on the first pilot signal and each locally stored pilot signal;
if values obtained through correlation operations on the first pilot signal and at least two locally stored pilot signals are greater than a threshold, determining, by the network device, that the first pilot signal is a pilot signal obtained by superimposing the at least two pilot signals; and
determining, by the network device in the at least two pilot signals, the pilot signal sent by the terminal device.

10. The method according to any one of claims 6 to 9, wherein
the receiving, by a network device by using M first subcarriers, a pilot signal sent by a terminal device comprises:
receiving, by the network device by using the M first subcarriers in a first time range, the pilot signal sent by the terminal device; and
the method further comprises:
receiving, by the network device by using K first subcarriers in a second time range, the pilot signal sent by the terminal device, wherein K is a positive integer less than N.

11. A terminal device, comprising:
a transmitter;
a memory, configured to store an instruction; and
a processor, wherein the processor is connected to the transmitter and the memory, and is configured to execute the instruction to: map a pilot signal to M first subcarriers, wherein each first subcarrier is specially used for carrying a pilot signal, a quantity of available subcarriers of the terminal device is N, and M is a positive integer less than N; and instruct the transmitter to send the pilot signal to a network device by using the M first subcarriers.

12. The terminal device according to claim 11, wherein if M is greater than or equal to 2, there is at least one second subcarrier between every two of the M first subcarriers, and the second subcarrier is used to carry a data signal sent by the terminal device.

13. The terminal device according to claim 11, wherein if M is equal to 1, the M first subcarriers are located in the middle of the available subcarriers of the terminal device.

14. The terminal device according to any one of claims 11 to 13, wherein a total bandwidth of the available subcarriers of the terminal device is less than a coherence bandwidth of a radio channel between the terminal device and the network device.

15. The terminal device according to any one of claims 11 to 14, wherein the processor is configured to:
map the pilot signal to the M first subcarriers in a first time range; and
map the pilot signal to K first subcarriers in a second time range, wherein K is a positive integer less than N.

16. A network device, comprising:
a receiver;
a memory, configured to store an instruction; and
a processor, wherein the processor is connected to the transmitter and the memory, and is configured to execute the instruction to: instruct the receiver to receive, by using M first subcarriers, a pilot signal sent by a terminal device, wherein each first subcarrier is specially used for carrying a pilot signal, a quantity of available subcarriers allocated by the network device to the terminal device is N, and M is a positive integer less than N; and
the processor further performs channel estimation based on the received pilot signal.

17. The network device according to claim 16, wherein if M is greater than or equal to 2, there is at least one second subcarrier between every two of the M first subcarriers, and the second subcarrier is used to carry a data signal sent by the terminal device.

18. The network device according to claim 16, wherein if M is equal to 1, the M first subcarriers are located in the middle of the available subcarriers of the terminal device.

19. The network device according to claim 18, wherein the processor is further configured to:
after instructing the receiver to receive a first pilot signal by using one of the M first subcarriers, perform a correlation operation on the first pilot signal and each locally stored pilot signal;
if values obtained through correlation operations on the first pilot signal and at least two locally stored pilot signals are greater than a threshold, determine that the first pilot signal is a pilot signal obtained by superimposing the at least two pilot signals; and
determine, in the at least two pilot signals, the pilot signal sent by the terminal device.

20. The network device according to any one of claims 16 to 19, wherein the processor is configured to:
instruct the receiver to receive, by using the M first subcarriers in a first time range, the pilot signal sent by the terminal device; and
instruct the receiver to receive, by using K first subcarriers in a second time range, the pilot signal sent by the terminal device, wherein K is a positive integer less than N.
